# EUROPEAN PATENT APPLICATION

(11) **EP 1 359 772 A2**
(43) Date of publication of application: **05.11.2003**
(21) Application number: 03252721.0
(22) Date of filing: 30.04.2003
(51) Int. Cl.: H04N 9/31

(54) **Image projecting apparatus**

(30) Priority: 02.05.2002 KR 2002024209
(71) Applicant: SAMSUNG ELECTRONICS CO., LTD., Suwon-City, Kyungki-do (KR)
(72) Inventor: Dho, Sang-whoe, Paldal-gu, Suwon-city, Gyunggi-do (KR); Hong, Chang-wan, 431-1104 Samsung Raemian Apt., Paldal-gu, Suwon-city, Gyunggi-do (KR)
(74) Representative: Geary, Stuart Lloyd

(57) **Abstract**

An image projecting apparatus (300) having an optical switch of a non-square matrix structure, is provided. A light source (210) emits a plurality of monochromatic lights having different wavelengths. A first light transmission unit (220) includes of a plurality of optical fibres (222a, 222b, 222c) that allows monochromatic lights to be passed therethrough. An optical switch unit (230) has a plurality of non-square matrix type reflecting mirrors to selectively reflect the monochromatic lights. The reflecting mirrors includes a first group (230a, 230b, 230c, 230g, 230h, 230i, 230m, 230n, 230o) placed at odd lines and a second group (230d, 230e, 230f, 230j, 230k, 2301, 230p, 230q, 230r) placed at even lines. A square-beam generation unit (260) converts reflected monochromatic lights into square beams, and a panel (270) transmits the monochromatic lights converted into square beams and forms monochromatic signals of a predetermined size.

## Description

The present invention relates to an image projecting apparatus comprising a light modulator, having a plurality of sections, and a light source for concurrently illuminating each of said sections with light of a different colour, the light source being configured such that for each section the colour of the illuminating light is changed according to a predetermined cycle.

A projector is an apparatus for image projecting that shows an image by projecting an input image signal on a screen. Such an image projecting apparatus is mainly used for presenting in a meeting room, in a projector in a cinema, or in a home theatre.

A conventional method for projecting an image on a screen involves magnifying the image shown on a liquid crystal display (LCD) or a cathode ray tube (CRT) with a lens. However, this method only magnifies an image and does not provide a clear image. To solve the above problem, an image projecting apparatus applying a DMD (Digital Micro-mirror Device) panel is now used.

A DMD is an optical-switch, which uses a micro-mirror. The micro-mirror controls the reflection of light in accordance with an input image signal. Also, a DMD applies a digital method, thus colour reproduction of the image signal is good and brightness is high. Moreover, it does not require A/D or D/A conversion, thus images are clearly realised.

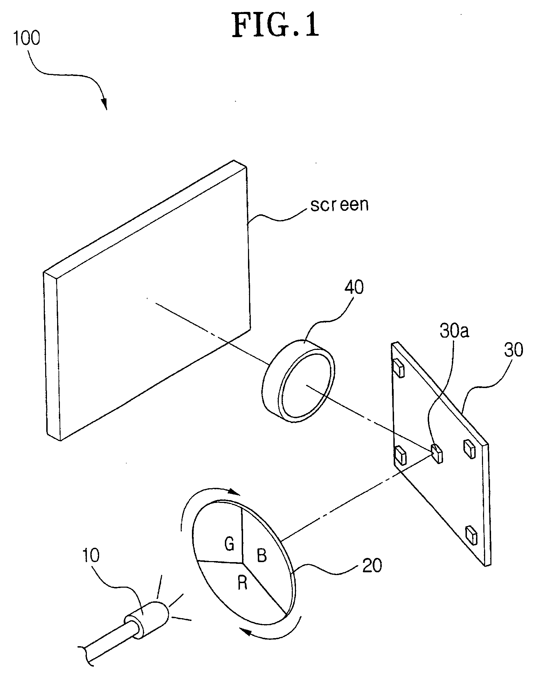

Figure 1 shows the basic structure of a conventional image projecting apparatus using a colour wheel. Referring to Figure 1, the conventional image projecting apparatus 100 has a light source 10, a colour wheel 20, a DMD panel 30 and a projecting lens 40. In Figure 1, an optical passage of white light is shown as a one-dotted line.

The light source 10 emits white light by using an arc lamp. The colour wheel 20 is divided into R(red), G(green) and B(blue) regions and is rotated (in a direction shown by an arrow) by a rotating means (not shown).

The white light emitted from the light source 10 is separated into R, G, and B beams by the R, G and B regions of the colour wheel 20. The DMD panel 30 is composed of a plurality of micro-mirrors 30a. The separated R, G and B beams are projected to the DMD panel 30 and reflected at the micro-mirrors 30a. Reflected R, G and B beams pass through the projecting lens 40 and create an image on a screen.

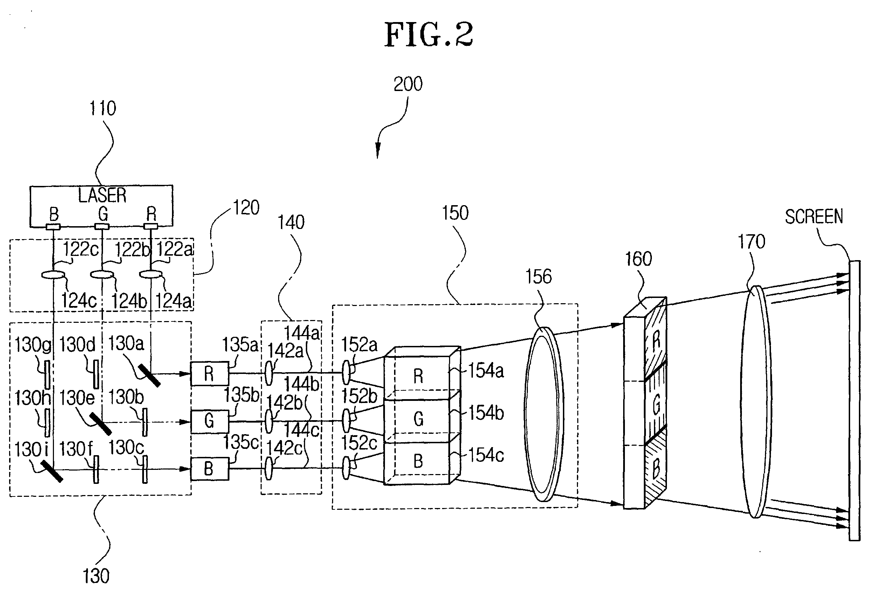

Figure 2 shows the basic structure of an image projecting apparatus with a 3X3 matrix structure. The image projecting apparatus 200 of Figure 2 is not comprised in the state of the art within the meaning of Art. 54(2) EPC.

Referring to Figure 2, the image projecting apparatus 200 has a light source 110, a first light transmission unit 120, an optical-switch unit 130, a second light transmission unit 140, square-beam generation units 150, a panel 160 and a projecting lens unit 170. Moreover, the optical passages of R, G, and B laser beams in the optical-switch unit 130 are shown by a one-dotted line, a two-dotted line and a three-dotted line, respectively.

The light source 110 emits a plurality of monochromatic lights having different wavelengths from each other and, in this embodiment, the monochromatic lights are R, G, and B laser beams. The light transmission unit 120 has a plurality of first optical fibres 122a, 122b and 122c and a plurality of first collimating lenses 124a, 124b and 124c. The first optical fibres 122a, 122b and 122c allow R, G, and B laser beams to pass therethrough, and the first collimating lenses 124a, 124b and 124c focus the laser beams transmitted through the optical fibres to the optical-switch unit 130.

The optical-switch unit 130 has optical switches 130a to 130i arranged in a 3X3 matrix structure. Each of the optical switches 130a to 130i selectively reflects the focused laser beams to output ports 135a, 135b and 135c.

The laser beams reflected from the optical switches 130a to 130i of the optical-switch unit 130 are incident on second collimating lenses 142a, 142b and 142c after passing through output ports 135a, 135b and 135c, respectively.

The second light transmission unit 140 has the plurality of second collimating lenses 142a, 142b and 142c and a plurality of second optical fibres 144a, 144b and 144c. The R, G and B laser beams focused to the second optical fibres 144a, 144b and 144c by the second collimating lenses 142a, 142b and 142c are respectively transmitted to light tubes 154a, 154b, and 154c of square-beam generation unit 150.

The square-beam generation unit 150 has a plurality of first lenses 152a, 152b and 152c, a plurality of light tubes 154a, 154b and 154c, and a second lens 156. The light tubes 154a, 154b and 154c convert the laser beams spread by the first lenses 152a, 152b and 152c into square beams. The second lens 156 further spreads the converted laser beams.

The panel 160 is a DMD panel. The panel 160 receives the spread R, G and B laser beams, which form respective R, G and B colour strips, each at one of three sections of the panel 160.

The three R, G and B colour strips on the panel 160 are formed by the manipulation of the optical-switch unit 130, and one image is created as the same colour strip is formed three times at different positions that are upper, middle and lower sections of the panel 160.

The panel 160 digitises and time-divides the R, G and B colour strips and reflects them at a predetermined angle. The reflected image of the entire panel is projected onto a screen through the projecting lens 170 and the image is realised. The projecting lens 170 is installed facing the panel 160.

The conventional image projecting apparatus 100 described previously, creates an image by using the colour wheel 20, and in this case, the amount of light used in DMD panel 30 is one third of the entire amount produced by the light source 10.

This is because the R beam passed through the R region of the colour wheel 20 is evenly projected to the entire DMD panel 30 but G and B beams are blocked by a colour filter and not used. It is the same when G and B beams are projected.

The colour wheel method can only use one third of the incident white light, and thus the luminance of the image is lowered to one third. In other words, the entire amount of the light is decreased as the white light emitted from the light source is projected to DMD panel 30 after passing through the colour wheel and as a result, light efficiency is lowered as well. Furthermore, the luminance of the created image cannot be maximized.

In addition, the image projecting apparatus 200 of Figure 2 creates an image by using an optical switch having a 3X3 matrix structure, thus the light efficiency of the apparatus 200 is greater than that of an optical system using a colour wheel. However, in the image projecting apparatus 200, the ends of each colour strip formed at the upper, middle and lower section of the panel 160, are overlapped, and thus the boundaries of the colour signals are not clear. In this case, an image realised on a screen has an extra line.

An image projecting apparatus, according to the present invention, is characterised in that the light source is configured such that for each section, first and second parts thereof are illuminated alternately.

Preferably, the apparatus comprises optical switching means for selectively outputting said light of different colours to said sections. More preferably, the optical switching means comprises a plurality of MEMS mirrors disposed in a 6X3 matrix structure.

Preferably, the light source comprises a plurality of lasers for respectively emitting red, green and blue light.

Preferably, said first and second parts of each of said sections are rectangular.

Preferably, the apparatus comprises means for receiving a beam of light having a substantially circular cross-section and outputting a beam having a substantially rectangular cross-section.

Preferably, the light modulator is a DMD panel or an LCD panel.

An embodiment of the present invention will now be described, by way of example, with reference to Figures 3 to 5F of the accompanying drawings, in which:
Figure 1 shows the basic structure of a conventional image projecting apparatus using a colour wheel;
Figure 2 shows the basic structure of an image projecting apparatus with a 3X3 matrix structure;
Figure 3 shows an image projecting apparatus with a 6X3 matrix structure according to the present invention;
Figure 4 is a view for explaining colour strips formed on a DMD panel by a 6X3 optical-switch unit;
Figures 5A to 5F show a process for realising an image in accordance with the manipulation of an optical-switch unit according to the present invention.

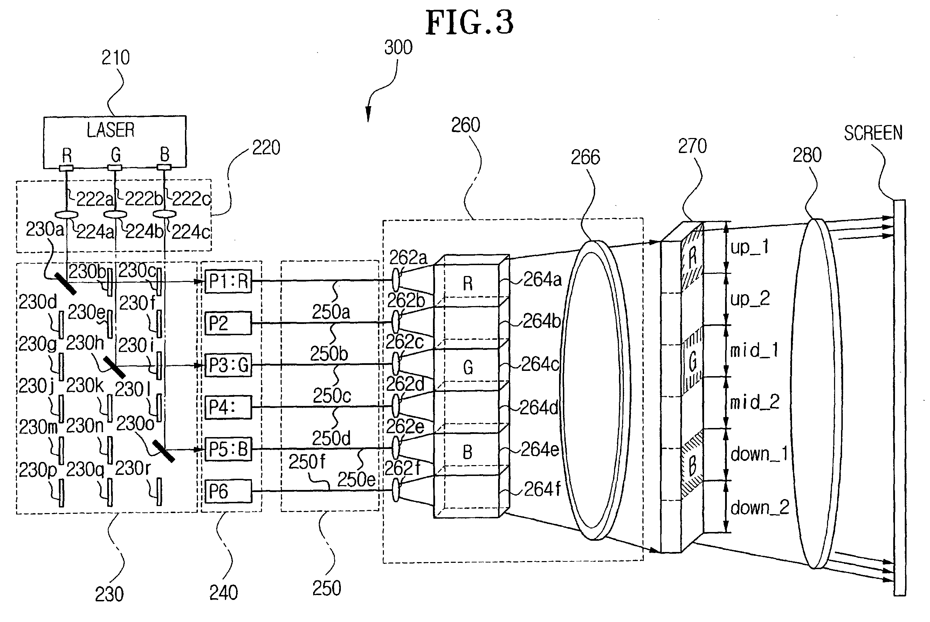

Referring to Figure 3, the image projecting apparatus 300 according to the present invention includes a light source 210, a first light transmission unit 220, an optical-switch unit 230, an output port 240, a second light transmission unit 250, a square-beam generation unit 260, a panel 270 and a projecting lens unit 280. In the optical-switch unit 230 of Figure 3, the light passages of R, G, and B laser beams are indicated by a one-dotted line, a two-dotted line and a three-dotted line, respectively.

The light source 210 emits a plurality of monochromatic lights having different wavelengths. A laser, an arc lamp, a metal halide lamp, a halogen lamp or a xenon lamp can be used as the light source 210. In the present embodiment, lasers emitting R, G, and B beams will be used as the light source 210.

The first light transmission unit 220 has a plurality of first optical fibres 222a, 222b and 222c and a plurality of first collimating lenses 224a, 224b and 224c. The first optical fibres 222a, 222b and 222c transmit each of the R, G and B laser beams to the first collimating lenses 224a, 224b and 224c, respectively. The first collimating lenses 224a, 224b and 224c focus the transmitted R, G and B laser beams to the optical-switch unit 230.

The optical-switch unit 230 reflects the R, G and B laser beams at a predetermined angle or permits the R, G and B laser beams to pass therethrough, and has a plurality of optical-switches arranged in a non-square matrix structure. In other words, the plurality of optical switches is arranged in an mXn matrix structure (where m is an integer that is more than 3, n<m) or an mXn matrix structure (where n is an integer that is more than 3, m<n). In this case, the optical-switch unit 230 has mXn number of optical switches.

It is preferable that a high-reflection mirror manufactured by applying MEMS (Micro Electro Mechanical System) is used for the optical switches. The optical switches output the R, G and B laser beams directly, without converting the input optical signals into electrical signals. Therefore, the speed of switching on or off is tens of thousands of times faster than the conventional switching speed required for converting optical signals into electric signals.

The optical switches have a reflecting mirror and a driving unit. One side of the reflecting mirror is a high reflecting mirror of a MEMS and it reflects a laser beam. The reflecting mirror is moved by the driving unit between a first position (on position) where the R, G, and B laser beams input into the optical switch are reflected to a certain section of the panel, and a second position (off position) where the R, G, and B laser beams input into the optical switch travel straight through.

In the first position (on), the optical switch is tilted (for example, the position of the optical switch indicated by 230a, 230h and 230o in Figure 3), and reflects the input laser beam. In the second position (off), the optical switch lies down, parallel to the input laser beam (for example, the position of the optical switch indicated by 230b to 230g, 230i to 230n and 230p to 230r in Figure 3).

Referring to Figure 3 again, the optical switch unit 230 having 18 optical switches 230a to 230r formed in a 6X3 matrix structure will now be described. The optical switches 230a to 230r of the optical switch unit 230 are divided into a first group provided at odd numbered lines (230a, 230b, 230c, 230g, 230h, 230i, 230m, 230n and 230o) and a second group provided at even numbered lines (230d, 230e, 230f, 230j, 230k, 2301, 230p, 230q and 230r).

The first group and the second group of the optical switch unit 230 alternately reflect monochromatic light. Moreover, the first group (first line, third line and fifth line in a (3X3) matrix) of the optical switch unit 230 operates with only one optical switch of any one row or column being placed in the first position (on). In addition, the first group operates with the three optical switches being placed in the first position simultaneously or all of (3X3) optical switches being placed at the first position in a predetermined order. This is identically applied to the second group (second line, fourth line and sixth line in another (3X3) matrix, interdigitated with the (3X3) matrix of the first group).

For example, when R, G, and B laser beams incident in the optical switch unit 230 are reflected by the first group, the second group is placed in the second position (off) for a predetermined time. When the predetermined time has passed, the first group is placed in the second position (off) and the R, G, and B laser beams are reflected by the second group. The first group and the second group alternately reflect the R, G and B laser beams or allow them pass through, at a predetermined temporal interval.

The predetermined temporal interval is the time maintained before the first group turns to the second group or the second group turns to the first group. The temporal interval is the time required for realising 60 frames of image per one second. In practice, the temporal interval can differ based on the driving method.

Referring to Figure 3, reflection of R, G and B laser beams by the first group will now be described. When a certain optical switch 230a of the first group is placed in the first position (on), optical switches 230b, 230c, 230g and 230m placed in the same row and column as the certain optical switch 230a are placed in the second position (off). When a certain optical switch 230h is placed in the first position (on), optical switches 230i and 230n placed in the same row and column as the certain optical switch 230h are placed in the second position (off), and the remaining optical switch 230o is placed in the first position (on).

In the above case, a R laser beam is reflected at an optical switch indicated by 230a, a G laser beam is reflected at an optical switch indicated by 230h, and a B laser beam is reflected at an optical switch indicated by 230o. When the above process is completed, the second group reflects laser beams in the same manner.

Furthermore, one image is created as a number (6X3) of optical switches (230a to 230r) are placed in the first position (on) at least one time. That is, the process of placing three optical switches in different rows and columns of one group in the first position (on) after three optical switches in different rows and columns of the other group are placed in the first position (on), is repeated three times. In the above process, the same optical switch is not placed in the first position (on), more than once.

Laser beams reflected at the optical switches 230a to 230r of the optical switch unit 230 are transmitted to the second light transmission unit 250 by the output port unit 240.

The output port unit 240 has a plurality of output ports P1, P2, P3, P4, P5 and P6. The output ports P1 to P6 are installed at an output end of the optical switch unit 230 in order to be aligned with each row of the optical switch unit 230, respectively.

The second light transmission unit 250 has a plurality of second optical fibres 250a to 250f. In addition, a plurality of second collimating lenses (not shown) can be provided at the front ends of the second optical fibres 250a to 250f. The second optical fibres 250a to 250f transmit R, G and B laser beams focused by the second collimating lenses (not shown) to the square-beam generation unit 260.

The square-beam generation unit 260 is provided at the output ends of the second optical fibres 250a to 250f, and it converts transmitted R, G and B laser beams into square beams having a predetermined ratio of width to height. The square-beam generation unit 260 has a plurality of first lenses 262a to 262f, a plurality of light tubes 264a to 264f and a second lens 266.

The first lenses 262a to 262f disperse each laser beam in order to allow the laser beams to be incident into the light tubes 264a to 264f corresponding to the first lenses 262a to 262f.

Each light tube 264a to 264f is formed with a cubic shape and the inside of each tube is hollow. The four inner sides of each light tube 264a to 264f are mirrored. The laser beams incident into the inside of the hollow light tubes 264a to 264f from the first lenses 262a to 262f are converted into square beams.

The second lens 266 spreads the laser beams converted into the square beams and allows the spread laser beams to be incident on the panel 270. The panel 270 is composed of one DMD (Digital Micro Mirror) panel or one LCD (Liquid Crystal Display) panel. A DMD panel is a reflective panel and LCD panel is a transmissive panel. When a LCD panel is used, the position of a projecting lens and a screen can be changed.

Hereinbelow, the present invention will be described by using DMD panel. However, Figure 3 shows a DMD panel excluding the optical passage of laser beams reflected at the DMD panel.

The panel 270 is a DMD panel of a single plate. R, G and B laser beams converted into square beams form R, G and B monochromatic strips, each at one section of the panel 270. The R strip is indicated by forward slanted lines, the G strip by vertical lines, and the B strip by backward slanted lines.

Furthermore, the panel 270 can be temporally divided into an upper end 1 (up_1), upper end 2 (up_2), middle 1 (mid_1), middle 2 (mid_2), down end 1 (down_1) and down end 2 (down_2). When the optical switch unit 230 is operated as shown in Figure 3, an R beam is reflected at a predetermined optical switch 230a, a G beam is reflected at a predetermined optical switch 230h, and a B beam is reflected at a predetermined optical switch 230o.

In the above case, the R beam is projected to the upper end 1 (up_1) of the panel 270 after passing through the first output port P1, second optical fibre 250a, first lens 262a, light tube 264a and second lens 266. The G beam is projected to the middle 1 (mid_1) and the B beam is projected to the down end 1 (down_1) of the panel 270.

The panel 270 has numerous fine driving mirrors, for digitally modulating the R, G and B strips sequentially. An image is created as the image of the entire panel reflected from the driving mirrors of the panel 270 is projected to a screen through the projecting lens unit 280. The projecting lens unit 280 is installed facing the panel 270.

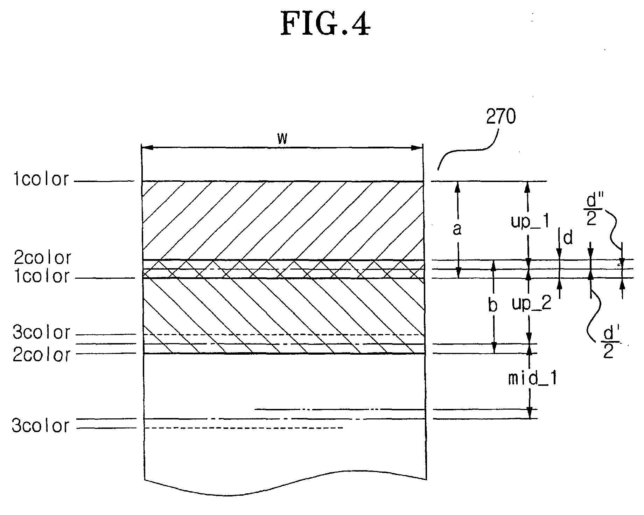

Referring to Figure 4, the upper end 1 (up_1), upper end 2 (up_2) and middle 1 (mid_1) of the panel 270 are shown.

When the first group of optical switches of the optical switch unit 230 reflect the R, G and B laser beams, the beam reflected at the first line of the optical switch unit 230 is incident on the upper end 1 (up_1) of the panel 270, to form a first monochromatic strip (1 colour), as indicated by the forward slanted lines. However, the first monochromatic strip (1 colour) may have an area of as much as wXa (where w is the width of the panel 270 and a is the height of the first strip), which is larger than that of the upper end 1 (up_1).

Similarly, when the second group of optical switches of the optical switch unit 230 reflect the R, G and B laser beams, the beam reflected at the second line of the optical switch unit 230 is incident on the upper end 2 (up_2) of the panel 270, to form a second monochromatic strip (2 colour), as indicated by the backward slanted lines. However, the second monochromatic strip (2 colour) may have an area of as much as wXb (where w is the width of the panel 270 and b is the height of the second strip), which is larger than that of the upper end 2 (up_2).

The region in which the forward slanted lines and the backward slanted lines are overlapped, indicates the area of the panel 270 wXd in which the light of the first monochromatic strip (1 colour) and subsequently the light of the second monochromatic strip (2 colour) is incident (where d is the height of the overlapped region).

However, due to the sequential formation of the first and second monochromatic strips by the operation of the optical switch unit 230, the appearance of a visible line at the boundary between the first and second monochromatic strips is avoided. This is because, when the first monochromatic strip (1 colour) is formed, the micro mirrors in the region wX(d"/2), which lie in the upper end 2 (up_2), are positioned so as not to reflect any light towards the screen, so the first monochromatic strip (1 colour) is formed only at the upper end 1 (up_1).

Similarly, when the second monochromatic strip (2 colour) is formed, the micro mirrors in the region wX(d'/2), which lie in the upper end 1 (up_1), are positioned so as not to reflect any light towards the screen, so the second monochromatic strip (2 colour) is formed only at the upper end 2 (up_2).

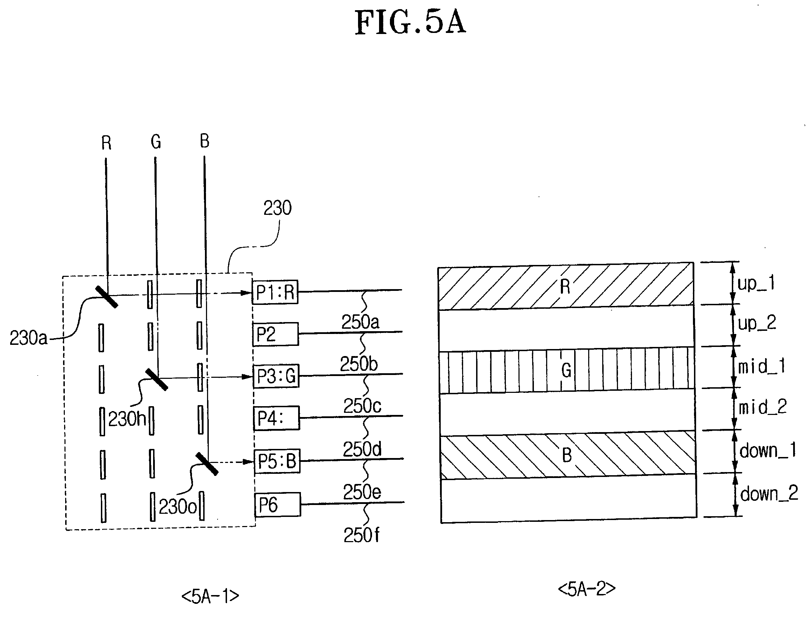

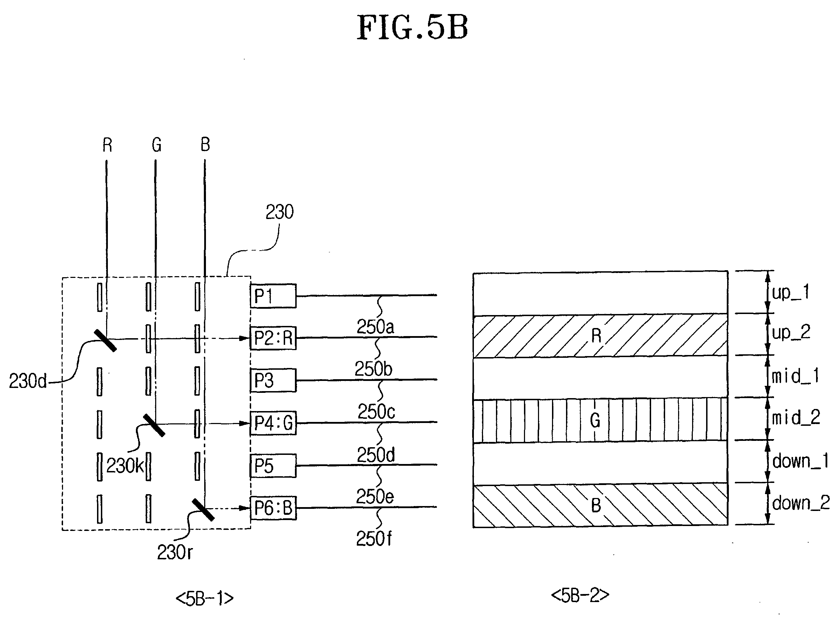

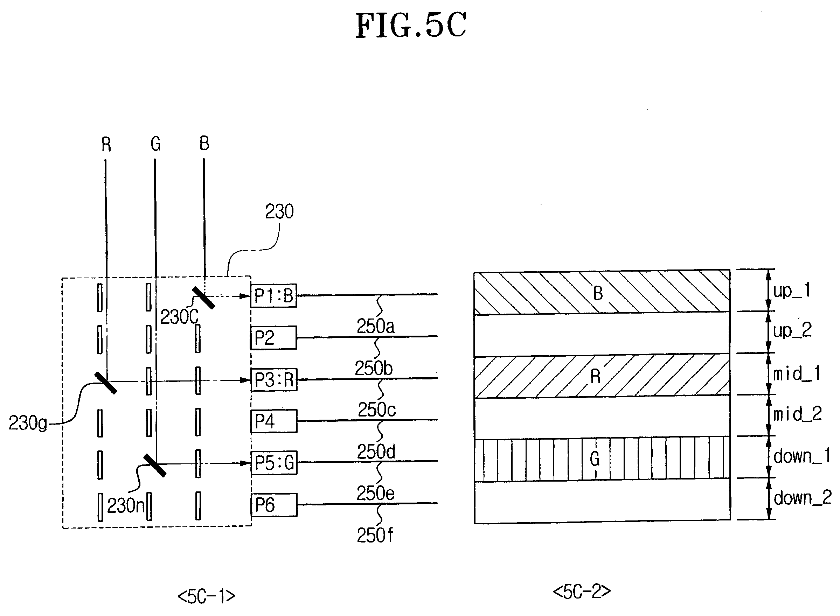

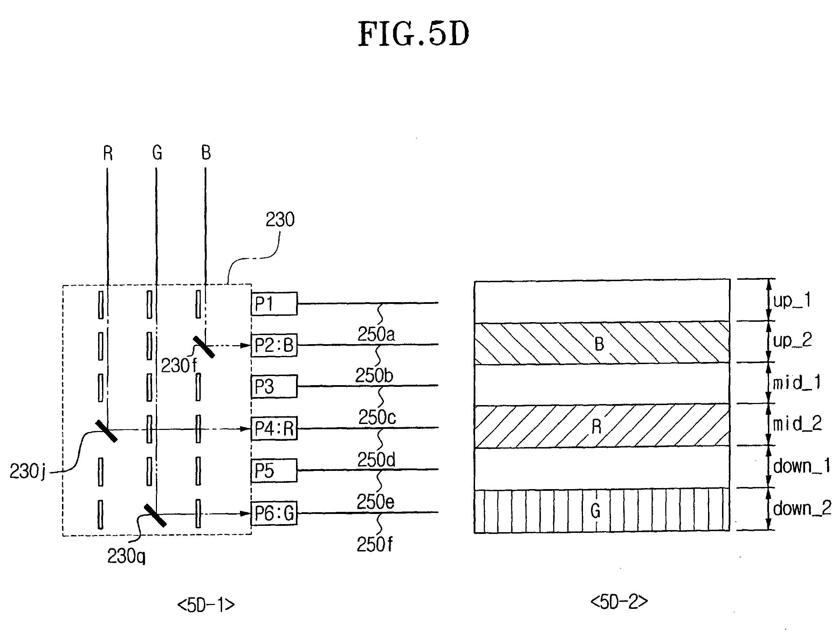

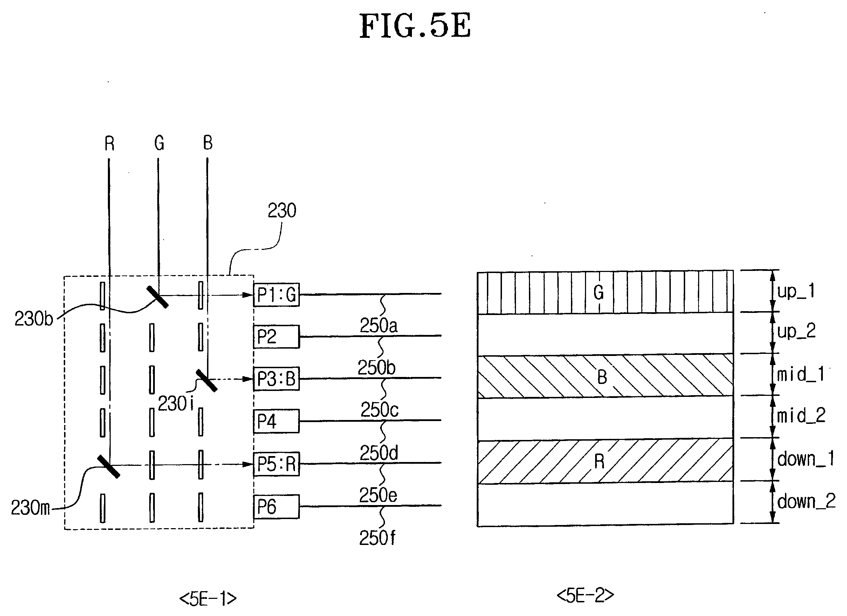

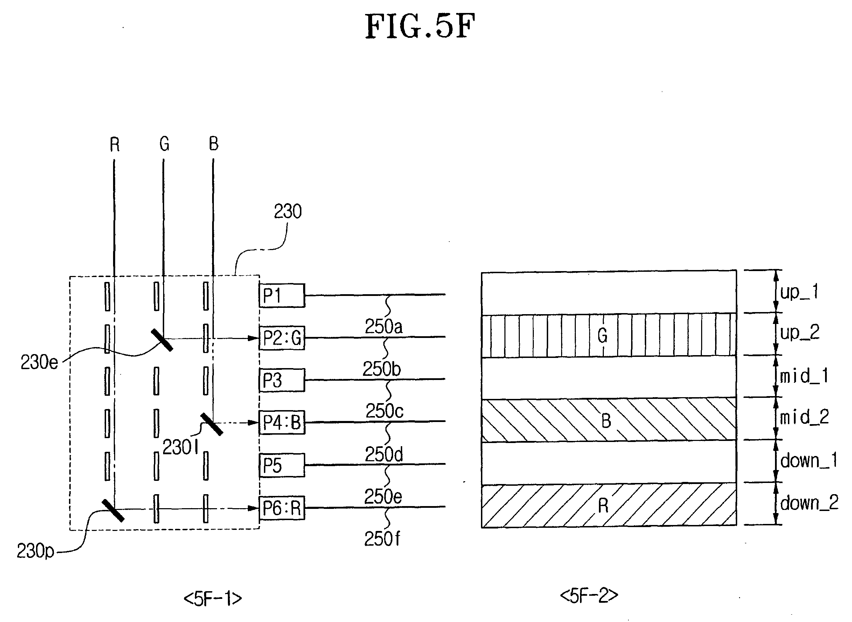

Figures 5A to 5F show a process for realising an image in accordance with the manipulation of an optical-switch unit according to the present invention. One image is realised by applying the processes from Figures 5A to 5F. These processes can be changed. Figures 5A, 5C and 5E show the operation of the optical switches placed in the first group, and Figures 5B, 5D and 5F show the operation of the optical switches placed in the second group.

Referring to Figures 5A to 5F, R, G and B laser beams transmitted through the first light transmission unit 220 are reflected at one of the optical switches 230a, 230g and 230m placed in the first column, one of the optical switches 230b, 230h and 230n placed in the second column, and one of the optical switches 230c, 230i and 230o placed in the third column of the first group, respectively. In the above case, only one optical switch in each row and column reflects a monochromatic laser beam in the first position (on), at any one time.

Furthermore, the laser beam reflected at one optical switch of the optical switches 230a to 230c placed in the first line of the first group forms a monochromatic strip at the upper end 1 (up_1) of the panel 270 through the first output port P1. The laser beam reflected at one optical switch of the optical switches 230g to 230i of the third line of the first group forms a monochromatic strip at the middle 1 (mid_1) of the panel 270 through the third output port P3. The laser beam reflected at one optical switch of the optical switches 230m to 230o of the fifth line of the first group forms a monochromatic strip at the down end 1 (down_1) of the panel 270 through the fifth output port P5.

When the optical switches 230a to 230r of the optical switch unit 230 are driven as shown in Table 1, that is, when only the first group is driven as shown in 5A-1 in Figure 5A, monochromatic strips as shown in 5A-2 of Figure 5A are formed at the panel 270.

**[Table 1]**

| | Port 1 | Port 2 | Port 3 | Port 4 | Port 5 | Port 6 |
|---|---|---|---|---|---|---|
| RED | 230a : On | 230d : Off | 230g : Off | 230j : Off | 230m : Off | 230p : Off |
| GREEN | 230b : Off | 230e : Off | 230h : On | 230k : Off | 230n : Off | 230q : Off |
| BLUE | 230e : Off | 230f : Off | 230i : Off | 230l : Off | 230o : On | 230r : Off |

In Table 1, RED means the R beam, GREEN means the G beam, BLUE means the B beam, Port 1 to Port 6 means a plurality of output ports, 'On' means the first position where the laser beam is reflected, 'Off means the second position where the laser beam passes through, and 230a to 230r mean optical switches.

P1:R of 5A-1 means that the R beam is input from the optical switch 230a into the first output port P1. P3:G means that the G beam is input from the optical switch 230h into the third output port P3. Lastly, P5:B means that the B beam is input from the optical switch 230o into the fifth output port P5.

When the optical switches 230a to 230r of the optical switch unit 230 are driven as shown in Table 2, that is, when only the second group is driven as shown in 5B-1 of Figure 5B, monochromatic strips as shown in 5B-2 of Figure 5B are formed at the panel 270.

**[Table 2]**

| | Port 1 | Port 2 | Port 3 | Port 4 | Port 5 | Port 6 |
|---|---|---|---|---|---|---|
| RED | 230a : Off | 230d : On | 230g : Off | 230j : Off | 230m : Off | 230p : Off |
| GREEN | 230b : Off | 230e : Off | 230h : Off | 230k : On | 230n : Off | 230q : Off |
| BLUE | 230c : Off | 230f : Off | 230i : Off | 230l : Off | 230o : Off | 230r : On |

When the optical switches 230a to 230o of the optical switch unit 230 are driven as shown in Table 3, that is, when only the first group is driven as shown in 5C-1 of Figure 5, monochromatic strips as shown in 5C-2 of Figure 5C are formed at the panel 270.

**[Table 3]**

| | Port 1 | Port 2 | Port 3 | Port 4 | Port 5 | Port 6 |
|---|---|---|---|---|---|---|
| RED | 230a : Off | 230d : Off | 230g : On | 230j : Off | 230m : Off | 230p : Off |
| GREEN | 230b : Off | 230e : Off | 230h : Off | 230k : Off | 230n : On | 230q : Off |
| BLUE | 230c : On | 230f : Off | 230i : Off | 230l : Off | 230o : Off | 230r : Off |

When the optical switches 230a to 230r of the optical switch unit 230 are driven as shown in Table 4, that is, when only the second group is driven as shown in 5D-1 of Figure 5D, monochromatic strips as shown in 5D-2 of Figure 5D are formed at the panel 270.

**[Table 4]**

| | Port 1 | Port 2 | Port 3 | Port 4 | Port 5 | Port 6 |
|---|---|---|---|---|---|---|
| RED | 230a : Off | 230d : Off | 230g : Off | 230j : On | 230m : Off | 230p : Off |
| GREEN | 230b : Off | 230e : Off | 230h : Off | 230k : Off | 230n : Off | 230q : On |
| BLUE | 230c : Off | 230f : On | 230i : Off | 230l : Off | 230o : Off | 230r : Off |

When the optical switches 230a to 230r of the optical switch unit 230 are driven as shown in Table 5, that is, when only the first group is driven as shown in 5E-1 of Figure 5E, monochromatic strips as shown in 5E-2 of Figure 5E are formed at the panel 270.

**[Table 5]**

| | Port 1 | Port 2 | Port 3 | Port 4 | Port 5 | Port 6 |
|---|---|---|---|---|---|---|
| RED | 230a : Off | 230d : Off | 230g : Off | 230j : Off | 230m : On | 230p : Off |
| GREEN | 230b : On | 230e : Off | 230h : Off | 230k : Off | 230n : Off | 230q : Off |
| BLUE | 230c : Off | 230f : Off | 230i : On | 230l : Off | 230o : Off | 230r : Off |

When the optical switches 230a to 230r of the optical switch unit 230 are driven as shown in Table 6, that is, when only the second group is driven as shown in 5F-1 of Figure 5F, monochromatic strips as shown in 5F-2 of Figure 5F are formed at the panel 270.

**[Table 6]**

| | Port 1 | Port 2 | Port 3 | Port 4 | Port 5 | Port 6 |
|---|---|---|---|---|---|---|
| RED | 230a : Off | 230d : Off | 230g : Off | 230j : Off | 230m : Off | 230p : On |
| GREEN | 230b : Off | 230e : On | 230h : Off | 230k : Off | 230n : Off | 230q : Off |
| BLUE | 230c : Off | 230f : Off | 230i : Off | 230l : On | 230o : Off | 230r : Off |

As described so far, an image is realised by performing the processes of Figures 5A to 5F in a predetermined order. Yet, the first group and the second group can be operated in an alternate order. Moreover, anamorphic lenses can be used as the square-beam generation unit 260 instead of the light tubes 264a to 264f used in the present invention. The anamorphic lenses have different curvatures for the length and the width and realise bar-typed beams of colour strips on a panel.

According to the present invention, as optical switches of a (6X3) or a (3X6) matrix structure are driven, the edges of monochromatic strips formed on a panel are not overlapped. In particular, the optical switches are operated in an alternate order for a predetermined time interval, thus the overlap of the edge lines of the monochromatic strips does not occur. Furthermore, since the monochromatic strips are formed in consecutive order on the panel by using the MEMS method, the efficiency of light utilization on the panel can be increased. Accordingly, as the amount of the light and the utilisation of the light increase, the luminance of a realised image can be improved.

## Claims

1. An image projecting apparatus comprising a light modulator (270), having a plurality of sections, and a light source (210) for concurrently illuminating each of said sections with light of a different colour, the light source being configured such that for each section the colour of the illuminating light is changed according to a predetermined cycle, **characterised in that** the light source (210) is configured such that for each section, first and second parts thereof are illuminated alternately.

2. An apparatus according to claim 1, comprising optical switching means (230) for selectively outputting said light of different colours to said sections.

3. An apparatus according to claim 2, wherein the optical switching means (230) comprises a plurality of MEMS mirrors disposed in a 6X3 matrix structure.

4. An apparatus according to claim 1, wherein the light source (210) comprises a plurality of lasers for respectively emitting red, green and blue light.

5. An apparatus according to claim 1, wherein said first and second parts of each of said sections are rectangular.

6. An apparatus according to claim 1, comprising means (260) for receiving a beam of light having a substantially circular cross-section and outputting a beam having a substantially rectangular cross-section.

7. An apparatus according to claim 1, wherein the light modulator (270) is a DMD panel or an LCD panel.

8. An image projecting apparatus comprising:
a light source to emit a plurality of monochromatic lights of different wavelengths;
a light transmission unit comprising a first plurality of optical fibers that said plurality of monochromatic lights respectively pass through;
an optical switch unit comprising a plurality of reflecting mirrors having a matrix structure to selectively reflect said plurality of monochromatic lights, said plurality of reflecting mirrors having the matrix structure comprising a first group placed at an odd row and a second group placed an even row;
at least one square-beam generation unit to convert the reflected said plurality of monochromatic lights to respective square beam;
a panel to form a plurality of monochromatic strips of a predetermined size based on an input of said square beam-converted plurality of monochromatic lights; and
a projecting lens unit installed facing the panel,
wherein the first group and the second group of the optical switch unit reflect said plurality of monochromatic lights in an alternate order.

9. The apparatus of claim 8, wherein the matrix structure is a non-square matrix structure.

10. The image projecting apparatus of claim 8, wherein the plurality of reflecting mirrors move between a first position to reflect the plurality of monochromatic lights and a second position to allow the plurality of monochromatic lights to be passed therethrough.

11. The image projecting apparatus of claim 10, wherein the optical switch unit allows only one of the plurality of reflecting mirrors located in a particular row and column of the matrix structure, to be placed at the first position .

12. The image projecting apparatus of claim 8, wherein at least one image is produced on the panel as said plurality of reflecting mirrors respectively reflect said plurality of monochromatic lights at least one time, in accordance with a predetermined order.

13. The image projecting apparatus of claim 9, wherein the non-square matrix of the optical switch unit is one of a (3X6) matrix and (6X3) matrix.

14. The image projecting apparatus of claim 8, wherein the plurality of reflecting mirrors are MEMS (Micro Electro Mechanical System) mirrors.

15. The image projecting apparatus of claim 8, further comprising an output port unit having a plurality of output ports to output said plurality of monochromatic lights reflected from the plurality of reflecting mirrors of the optical switch unit.

16. The image projecting apparatus of claim 15, wherein one of said plurality of monochromatic lights reflected from a first one of the plurality of reflecting mirrors is output to one of the plurality of output ports corresponding to a first one of the plurality of reflecting mirrors.

17. The image projecting apparatus of claim 15, further comprising a second light transmission unit comprised of a second plurality of optical fibers to transmit said plurality of monochromatic lights emitted from said plurality of output ports to said at least one square-beam generation unit.

18. The image projecting apparatus of claim 8, wherein the panel is a DMD (Digital Micromirror Device) that modulates the plurality of monochromatic strips to digital signals and reflects the digital signals to the projecting lens unit at a predetermined angle.
